Europäisches Patentamt

European Patent Office

Office européen des brevets

(19)

(11) Veröffentlichungsnummer: **0 389 978**
**A2**

## (12) EUROPÄISCHE PATENTANMELDUNG

(21) Anmeldenummer: 90105522.8

(22) Anmeldetag: 23.03.90

(51) Int. Cl.⁵: **B32B 3/12, B32B 7/14**

(30) Priorität: 28.03.89 DE 3910021
16.06.89 DE 3919657

(43) Veröffentlichungstag der Anmeldung:
03.10.90 Patentblatt 90/40

(84) Benannte Vertragsstaaten:
**DE ES FR GB IT NL SE**

(71) Anmelder: **BASF Aktiengesellschaft**
**Carl-Bosch-Strasse 38**
**D-6700 Ludwigshafen(DE)**

(72) Erfinder: **Kaspar, Dietmar**
**Kurzweil 8**
**D-6700 Ludwigshafen(DE)**
Erfinder: **Woltron, Herbert**
**Bachweg 1**
**D-6520 Worms(DE)**
Erfinder: **Kreibiehl, Guenter**
**Sperlinggasse 8**
**D-6700 Ludwigshafen(DE)**
Erfinder: **Eichenauer, Ulrich, Dr.**
**Paul-Ehrlich-Strasse 25a**
**D-6000 Frankfurt 70(DE)**
Erfinder: **Becker, Norbert**
**Ludwigshafenerstrasse 33**
**D-6708 Neuhofen(DE)**

(54) **Mehrschichtplatte.**

(57) Die Erfindung betrifft eine Mehrschichtplatte aus einer Kernschicht A mit Honigwaben-Struktur oder offenzelliger Schaum-Struktur, und mindestens einer Deckschicht C aus einem faserverstärkten thermoplastischen Kunststoff, wobei die Schichten A und C durch einen Klebstoff B aus einem thermoplastischen Kunststoff miteinander verbunden sind.

EP 0 389 978 A2

## Mehrschichtplatte

Die Erfindung betrifft eine Mehrschichtplatte aus einer Kernschicht A mit Honigwaben-Struktur oder offenzelliger Schaum-Struktur, und mindestens einer Deckschicht C aus einem faserverstärkten thermoplastischen Kunststoff, wobei die Schichten A und C durch einen Klebstoff B aus einem thermoplastischen Kunststoff miteinander verbunden sind.

Im Bereich der Innenausbauteile für Luftfahrzeuge zeigt sich aufgrund neuen Brandschutzanforderungen ein zunehmender Bedarf an hochfesten, hochsteifen Mehrschichtplatten mit polymerer Matrix.

Mehrschichtplatten aus einer Kernschicht mit Honigwabenstruktur und Deckschichten aus duroplastischen Kunststoffen sind bekannt. Die Verbindung zwischen den Schichten wird üblicherweise durch einen flüssigen Klebstoff, der auf die Deckschichten aufgetragen wird, oder durch einen Klebefilm bewirkt. In beiden Fällen ist der Klebstoff vorzugsweise ein Epoxidharz, das gegebenenfalls etwas anpolymerisiert sein kann.

In DE-A 20 09 090 (US 3 656 992) wird empfohlen, zum Verbinden von Kernschichten mit Zellstruktur und porösen Deckplatten perforierte Klebefolien zu verwenden, die vorzugsweise aus einem hitzehärtbaren Epoxidharzen bestehen, welches gegebenenfalls ein thermoplastisches Polymerisat zugemischt enthalten kann. Beim Erhitzen und Aushärten des Harzes bilden sich Klebstoffwülste an den Verbindungsstellen zwischen den Deckplatten und den Kanten der Zellstrukturkerne, was eine verbesserte Haftung zur Folge haben soll.

Mehrschichtplatten auf Basis von duroplastischen Werkstoffen weisen jedoch ein für viele Anwendungszwecke, insbesondere für den Flugzeuginnenausbau, nicht ausreichendes Brandverhalten auf. Außerdem läßt die Festigkeit und Steifigkeit sowie die Feuchtigkeitsaufnahme der bekannten Mehrschichtplatten zu wünschen übrig.

Der Erfindung lag die Aufgabe zugrunde, Mehrschichtplatten mit hervorragenden mechanischen Eigenschaften, ausreichendem Brandverhalten und geringer Feuchtigkeitsaufnahme bereitzustellen, wobei ein guter Verbund zwischen den Schichten gewährleistet sein sollte.

Diese Aufgaben sind durch die erfindungsgemäße Mehrschichtplatte gelöst. Die Kernschicht A weist Honigwaben-Struktur oder eine vorzugsweise offenzellige Schaumstruktur auf. Bevorzugtes Material für die Honigwaben ist Kunststoffbeschichtetes Papier (NOMEX-Papier), es kann jedoch auch Aluminium oder Kunststoff, insbesondere ein temperaturbeständiger thermoplastischer Kunststoff verwendet werden. Offenzellige Schaumstoffe können z. B. aus Polyethersulfon oder aus einem Melamin/Formaldehyd-Polykondensat bestehen. Die Dicke der Kernschicht kann zwischen 3 mm und 100 mm betragen.

Die Deckschicht C ist ein faserverstärkter thermoplastischer, vorzugsweise temperaturbeständiger Kunststoff, beispielsweise ein Polyethersulfon, Polyetherketon, Polyphenylensulfid, Polyimid oder Polyamid. Der Faseranteil beträgt vorzugsweise 40 bis 70 Vol.%. Die Fasern können z. B. aus Glas, Kohlenstoff oder aromatischen Polyamid bestehen, sie können in Vorzugsrichtungen orientiert oder als Gewebe vorliegen. Die Deckschicht ist im allgemeinen 0,1 bis 1 mm dick.

Der Klebstoff B ist ein thermoplastischer, vorzugsweise temperaturbeständiger Kunststoff, wobei wiederum die obengenannten Polymeren bevorzugt sind. Er muß mit dem Kunststoff der Deckschicht C verträglich sein; vorzugsweise wird in beiden Schichten der gleiche Kunststoff eingesetzt.

Bei einer bevorzugten Ausführungsform der erfindungsgemäßen Mehrschichtplatte ist der Klebstoff B nur an den Berührungslinien zwischen den Zellwänden der Kernschicht A und der Deckschicht C aufgetragen. Dadurch ist eine gezielte Materialeinbringung an die Verbindungsstellen gewährleistet und es wird unnötige Materialverschwendung vermieden.

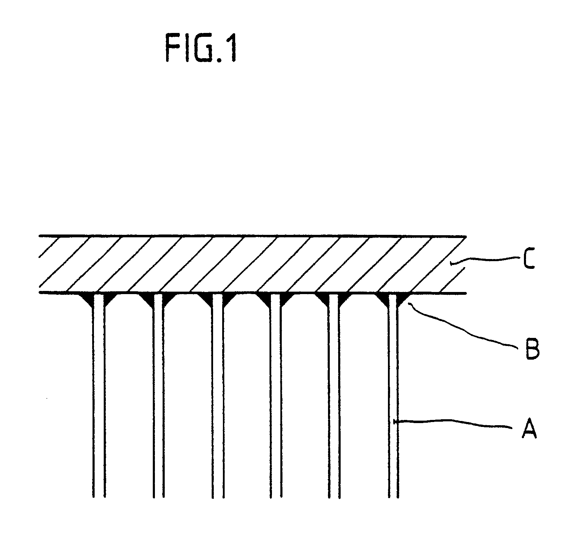

Bei dieser Ausführungsform wird der Klebstoff B zweckmäßigerweise als Lösung oder als Schmelze auf die Stirnfläche der Kernschicht aufgetragen. Dies kann durch Tauchen, Rakeln oder Walzen geschehen, vorzugsweise mit Hilfe eines Kalandrierwerks. Dabei bildet sich auf den äußeren Kanten der Zellwände ein sogenannter Meniskus aus. Gegebenenfalls verwendetes Lösungsmittel wird verdampft; dann werden Deckschicht und die mit dem Klebstoff versehene Kernschicht miteinander verpreßt. Fig. 1 zeigt schematisch diese Ausführungsform.

Bei einer anderen Ausführungsform liegt der Klebstoff B als Klebefolie vor und ist somit vollflächig mit der Deckschicht C verbunden.

Bei beiden Ausführungsformen der Erfindung müssen die Schichten miteinander verbunden werden. Dies geschieht bei erhöhter Temperatur, wobei der thermoplastische Kunststoff des Klebstoffs B schmilzt oder zumindest so weit erweicht, daß er sich mit den Schichten A und C haftend verbindet.

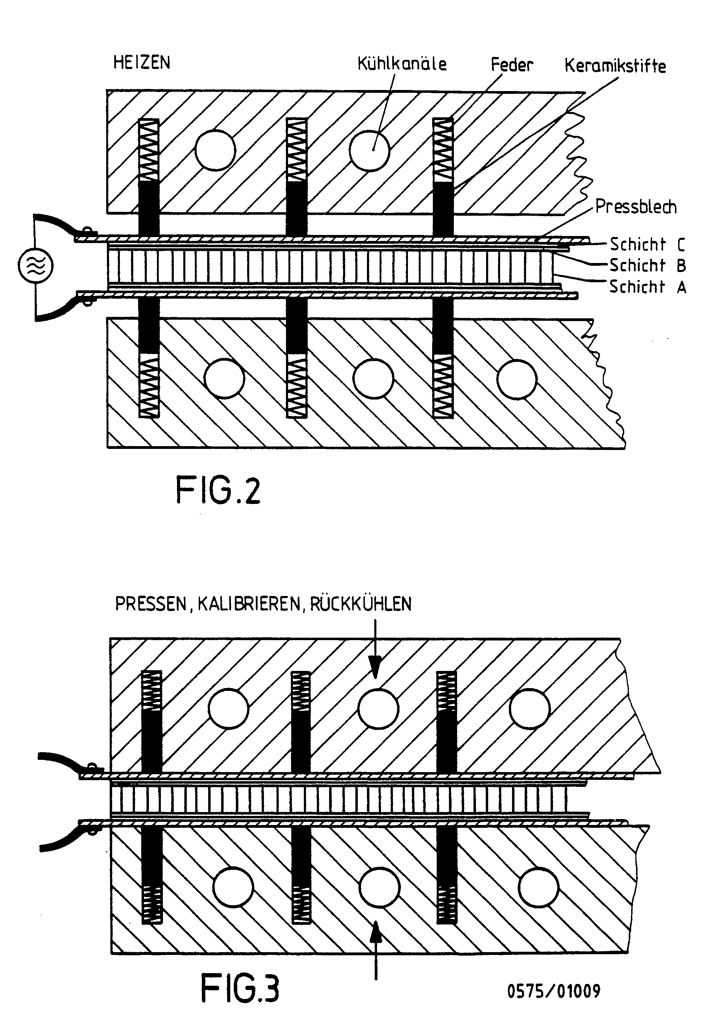

Bei einer bevorzugten Ausführungsform des Herstellverfahrens werden die zugeschnittenen Schichten zwischen zwei dünne, massearme Heizbleche einer Widerstandsheizung eingelegt, erwärmt, gepreßt und abgekühlt (Fig. 2).

Diese Bleche werden mittels Isolatoren, vorzugsweise durch Keramikstifte, elektrisch von den Pressplatten der Schließeinheit isoliert. Druckfedern stützen die Isolatoren elastisch gegen die Pressplatten ab.

Im einzelnen läuft das erfindungsgemäße Verfahren wie folgt ab:
- Die Schichten werden in die geöffnete Schließeinheit auf das untere Heizblech abgelegt.
- Die Schließeinheit wird soweit geschlossen, daß über Druckfedern die Isolatoren einen ausreichenden Druck auf die Heizbleche und damit während des Aufheizvorganges auf das Laminat ausüben. Dadurch wird ein sehr guter Wärmeübergang (durch Wärmeleitung) von den Heizblechen zum Laminat ermöglicht.
- In dieser Lage der Schließeinheit wird die elektrische Widerstandsheizung aktiviert. Die Laminattemperatur wird mit in die Heizbleche eingebrachten Thermoelementen gemessen.
- Nach Erreichen der Verarbeitungstemperatur des Pressgutes wird die elektrische Heizung abgeschaltet und die Schließeinheit auf die Distanzen im Werkzeug gefahren (Fig. 3). Die Distanzen dienen der Einstellung der Bauteildicke.

In dieser Phase werden die erwärmten Deckschichten mit dem Kernmaterial verpreßt und verbunden. Gleichzeitig beginnt die Wärmeabfuhr von den Heizblechen in die gekühlten Werkzeugplatten.
- Der Abkühlvorgang dauert im allgemeinen 20 sec bis 5 min, vorzugsweise 30 sec bis 2 min. Ist die vorbestimmte Endtemperatur erreicht, dann kann die Mehrschichtplatte entformt werden.

Dieses Verfahren arbeitet mit niedriger Spannung und hoher Stromstärke. Die Spannung kann gewählt werden zwischen 5 und 15 Volt je laufendem Meter Heizblechlänge. Die Stromstärke ist abhängig von der Heizblechbreite und -dicke. Für ein 1,2 mm starkes Heizblech liegt sie zwischen 3000 und 10000 Ampere je Meter Heizblechbreite.

Da für dieses Verfahren lediglich sehr dünne Heizbleche, vorzugsweise zwischen 0,5 und 5 mm Dicke, vorzugsweise zwischen 0,7 und 2 mm Verwendung finden, kann die erforderliche Energie zum Aufheizen der Laminate sehr schnell aufgebracht und außerdem auf ein Minimum reduziert werden.

Als weiterer Vorteil des erfindungsgemäßen Verfahrens zeigt es sich, daß durch die Verwendung dünner Heizplatten mit ihrer geringen Masse eine sehr hohe Abkühlgeschwindigkeit erzielt werden kann, so daß insgesamt kurze Zykluszeiten möglich werden.

Vorteilhaft ist weiterhin, daß die zugeschnittenen Halbzeuge in ein kaltes Werkzeug eingelegt werden können. Außerdem hat das Einlegen in das kalte Werkzeug noch den Vorteil, daß der Wärmeeintrag in das Pressgut - nach Aktivierung der Widerstandsheizung - gleichzeitig von oben und unten erfolgt.

Energietechnisch betrachtet stellt dieses Verfahren gegenüber den bekannten Pressverfahren eine sehr vorteilhafte Lösung dar, da die benötigten hohen Temperaturen mit sehr geringem Energieeintrag pro Presszyklus zu erreichen sind.

Bei einer anderen, kontinuierlichen Ausführungsform werden die Schichten in eine Doppelbandpresse mit einer Heiz- und einer Kühlzone eingeführt. Sie werden dort erst erwärmt, verpreßt und anschließend abgekühlt.

Die erfindungsgemäßen Mehrschichtenplatten eignen sich insbesondere für den Innenausbau von Flugzeugen, z.B. als Fußbodenpaneele. Sie können aber auch im Automobilbau oder Maschinenbau Verwendung finden.

Beispiel

Eine Mehrschichtplatte mit den Maßen 500 x 700 mm wird aus folgenden Schichten hergestellt:

Kernschicht A: Honeycomb aus NOMEX®-Papier, 8,8 mm dick

Klebschicht B: Polysulfon ULTRASON® S 2000, 0,15 mm dick .

Deckschicht C: Polysulfonmatrix mit 50 Vol.% Glasfasergewebe, 0,25 mm dick

Eine Kernschicht wird mit je 2 Kleb- und Deckschichten in einem Werkzeug nach Figur 2 verpreßt. Spannung: 10 Volt, Stromstärke: 3000 Ampère, Heizzeit: 1,5 min, Kühlzeit: 1 min, Verarbeitungstemperatur: 280° C.

**Ansprüche**

1. Mehrschichtplatte, bestehend aus einer Kernschicht A mit Honigwaben-Struktur oder Schaum-Struktur, und mindestens einer Deckschicht C aus einem faserverstärkten thermoplastischen Kunststoff, dadurch gekennzeichnet, daß die Schichten A und C miteinander verbunden sind durch einen Klebstoff B, der mit dem Kunststoff der Schicht C verträglich ist.

2. Mehrschichtplatte nach Anspruch 1, dadurch gekennzeichnet, daß der Klebstoff B nur an den Berührungslinien zwischen Deckschicht C und den Zellwänden der Kernschicht A aufgetragen ist.

3. Mehrschichtplatte nach Anspruch 1, dadurch gekennzeichnet, daß der Klebstoff B eine Klebefolie ist.

4. Mehrschichtplatte nach Anspruch 1, dadurch gekennzeichnet, daß der Kunststoff ein temperaturbeständiger, thermoplastischer Kunststoff, vorzugsweise ein Polyethersulfon, Polyetherketon, Polyphenylensulfid, Polyamid oder Polyimid ist.

5. Verfahren zur Herstellung der Mehrschichtplatte nach Anspruch 1, dadurch gekennzeichnet, daß die Schichten zwischen zwei dünne, massearme Heizbleche einer Widerstandsheizung eingelegt, erwärmt, gepreßt und in wenigen Sekunden abgekühlt werden.

6. Verfahren zur Herstellung der Mehrschichtenplatte nach Anspruch 1, dadurch gekennzeichnet, daß die Schichten in einer beheizten Doppelbandpresse erwärmt, verpreßt und anschließend abgekühlt werden.

# FIG.1

C

B

A

HEIZEN  Kühlkanäle  Feder  Keramikstifte

Pressblech

Schicht C
Schicht B
Schicht A

## FIG.2

PRESSEN, KALIBRIEREN, RÜCKKÜHLEN

## FIG.3

0575/01009